(19) Europäisches Patentamt
European Patent Office
Office européen des brevets

(11) EP 1 095 942 A2

(12) **EUROPÄISCHE PATENTANMELDUNG**

(43) Veröffentlichungstag:
**02.05.2001 Patentblatt 2001/18**

(21) Anmeldenummer: **00122499.7**

(22) Anmeldetag: **14.10.2000**

(51) Int. Cl.$^7$: **C07F 5/02**, H01M 4/60, C07F 9/00, C07F 5/00, C07F 9/70

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.10.1999 DE 19951804**

(71) Anmelder: **MERCK PATENT GmbH**
**64293 Darmstadt (DE)**

(72) Erfinder:
- **Heider, Udo, Dr.**
  **64560 Riedstadt (DE)**
- **Schmidt, Michael, Dr.**
  **64331 Weiterstadt (DE)**
- **Oesten, Rüdiger, Dr.**
  **64331 Weiterstadt (DE)**
- **Kühner, Andreas, Dr.**
  **64289 Darmstadt (DE)**
- **Franz, Klaus-Dieter, Dr.**
  **65779 Kelkheim (DE)**
- **Vaughan, Julian, Dr.**
  **North Baddesley, Southhampton S52 9NE (GB)**
- **Wiederhold, Holger**
  **63225 Langen (DE)**

(54) **Komplexsalze zur Anwendung in elektrochemischen Zellen**

(57) Die Erfindung betrifft ein Verfahren zur Herstellung von Komplexsalzen und deren Anwendung in elektrochemischen Zellen.

EP 1 095 942 A2

Printed by Xerox (UK) Business Services
2.16.7 (HRS)/3.6

## Beschreibung

Die Erfindung betrifft ein Verfahren zur Herstellung von Komplexsalzen und deren Anwendung in elektrochemischen Zellen.

Lithiumionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb. Wiederaufladbare Lithiumbatterien werden seit den frühen neunziger Jahren kommerziell angeboten.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalation und Insertions-Verbindungen verwendet. Anoden können aus Lithium-Metall, Kohlenstoffen, Graphit, graphitischen Kohlenstoffen oder anderen Lithium-Interkalation und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

Mit $LiPF_6$ wird derzeit in vielen Lithiumionen-Batterien eine stark hydrolyseempfindliche und thermisch instabile Substanz als Leitsalz verwendet. Im Kontakt mit der Feuchtigkeit der Luft und/oder Restwasser der Lösungsmittel entsteht sofort Flußsäure HF. Neben den toxischen Eigenschaften wirkt HF negativ auf das Zyklenverhalten und somit auf die Performance der Lithiumbatterie, da Metalle aus den Elektroden herausgelöst werden können.

In US 4505997 werden Lithiumimide und in US 5273840 Lithiummethanide beschrieben. Beide Salze besitzen eine hohe anodische Stabilität und bilden in organischen Carbonaten Lösungen mit hoher Leitfähigkeit. Aluminium, der kathodische Stromableiter in Lithiumionen Batterien, wird zumindest von Lithiumimid in nicht ausreichendem Maße passiviert. Lithiummethanid hingegen läßt sich nur mit sehr großem Aufwand herstellen und reinigen. Zudem hängen die elektrochemischen Eigenschaften wie Oxidationsstabilität und Passivierung von Aluminium sehr stark von der Reinheit des Methanids ab.

In WO 98/07729 wird daher eine neue Klasse von Leitsalzen, die Lithium-Boratkomplexe, beschrieben. In Zyklisierungsversuchen haben diese Verbindungen besonders gute Ergebnisse gezeigt und sich als besonders stabil erwiesen. In Kombination mit anderen Salzen weisen diese Komplexe einen synergistischen Stabilisierungseffekt gegenüber einer Oxidation auf.

Mit Lithiumbis[5-fluoro-2-olato-benzensulfonato(2-)O,O']borat(1-) wird ein Leitsalz beschrieben, das aufgrund seiner Eigenschaften als vielversprechendes Leitsalz zum Einsatz in Lithiumionen-Batterien zu bewerten ist. Problematisch ist jedoch die kostenintensive und komplizierte Synthese der Vorstufen.

Gegenstand der vorliegenden Erfindung ist es deshalb, Materialien zur Verfügung zu stellen, die kathodische Stromableiter passivieren und stabil gegen Oxidationsvorgänge sind, sowie ein einfaches Herstellverfahren für diese Materialien.

Die erfindungsgemäße Aufgabe wird gelöst durch Komplexsalze der allgemeinen Formel

$$M^{x+}[EZ]^{y-}_{x/y} \quad (I) \qquad (I)$$

worin bedeuten:

x, y 1, 2, 3, 4, 5, 6

$M^{x+}$ ein Metallion

E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben.

Diese Komplexsalze sind besonders als Leitsalze in Elektrolyten für elektrochemische Zellen geeignet.

Überraschend wurde gefunden, daß die erfindungsgemäßen Salze Übergangsmetallkathoden und Stromableiter passivieren können. Besonders die häufig verwendeten Aluminiumstromableiter können durch die Passivierung vor dem üblicherweise auftretenden Lochfraß geschützt werden.

Es wurde gefunden, daß die Komplexsalze der Formel (I) gute elektrochemische Eigenschaften aufweisen. So konnte z.B. eine gute Oxidationsstabilität nachgewiesen werden.

Überraschend wurde gefunden, daß die erfindungsgemäßen Salze eine stark verbesserte Ionenleitfähigkeit gegenüber den herkömmlichen Leitsalzen aufweisen.

Es können die Komplexsalze der Formel (I) und deren Mischungen als Leitsalze in Elektrolyten für elektrochemische Zellen verwendet werden. Ebenso können sie in Anteilen zwischen 1 und 99% in Kombination mit anderen Leitsalzen verwendet werden.

Besonders geeignet sind Komplexsalze gemäß Formel (I) mit $M^{x+} = Li^+$ oder Tetraalkylammonium und E = $BR^1{}_aR^2{}_bF_c$ und $PR^1{}_dR^2{}_eR^3{}_fR^4{}_gF_h$ mit a bis h= 0, 1, 2, 3, 4 oder 5, mit $a+b+c=3$ und $d+e+f+g+h=5$ .

Die erfindungsgemäßen Komplexsalze können in gängigen Elektrolyten eingesetzt werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen.

Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

m und p 0, 1, 2, 3 oder 4 mit $m+p=4$ und

$R^1$ und $R^2$ gleich oder verschieden sind,

gegebenenfalls durch eine Einfach- oder Doppelbindung direkt miteinander verbunden sind,

jeweils einzeln oder gemeinsam die Bedeutung eines aromatischen oder aliphatischen Carbon-, Dicarbon- oder Sulfonsäurerestes haben, oder

jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder

jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder

jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

haben und

Hal F, Cl oder Br

und

A Alkyl mit 1 bis 6 C-Atomen, das ein- bis dreifach halogeniert

sein kann, bedeuten. Ebenso geeignet sind Alkalialkoholate (DE 9910968) der allgemeinen Formel

$$Li^+ OR^-$$

worin R

die Bedeutung eines aromatischen oder aliphatischen Carbon-, Dicarbon- oder Sulfonsäurerestes hat, oder

die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder

die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder

die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

hat und

Hal F, Cl, oder Br,

und

A Alkyl mit 1 bis 6 C-Atomen, das ein- bis dreifach halogeniert sein kann.

Auch Verbindungen der allgemeinen Formel

$$[([R^1(CR^2R^3)_k]_lA_x)_yKt]^+ \ ^-N(CF_3)_2$$

wobei

Kt N, P, As, Sb, S, Se

A N, P, P(O), O, S, S(O), $SO_2$, As, As(O), Sb, Sb(O)

$R^1$, $R^2$ und $R^3$

gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein,

die an Kt gebundenen Gruppen können gleich oder verschieden sein

mit

n 1-18

m 3-7

k 0, 1-6

l 1 oder 2 im Fall von x=1 und 1 im Fall x=0

x 0,1

y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E$$

wobei

Kt, A, $R^1$, $R^2$, $R^3$, k, l, x und y die oben angegebene Bedeutung haben und

$^{-}E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Die erfindungsgemäßen Verbindungen können auch in Elektrolyten enthalten sein, die Verbindungen der Formel

$$X\text{-}(CYZ)_m\text{-}SO_2N(CR^1R^2R^3)_2$$

mit

X H, F, Cl, $C_nF_{2n+1}$, $C_nF_{2n-1}$, $(SO_2)_kN(CR^1R^2R^3)_2$

Y H, F, Cl

Z H, F, Cl

$R^1$, $R^2$, $R^3$ H und/oder Alkyl, Fluoralkyl, Cycloalkyl

m 0-9 und falls X=H, $m \neq 0$

n 1-9

k 0, falls m=0 und k=1, falls m=1-9

enthalten, dagestellt dadurch, daß teil- oder perfluorierte Alkysulfonylfluoride mit Dimethylamin in organischen Lösungsmitteln umgesetzt werden (DE 199 466 73).

Auch Lithiumkomplexsalze der Formel

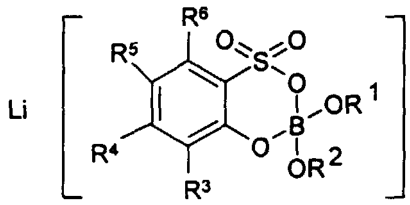

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen heterocyclischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,

Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Auch Boratsalze (DE 199 59 722) der allgemeinen Formel

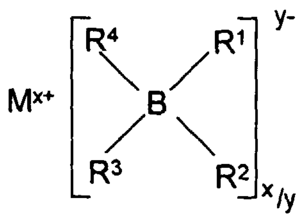

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Auch Additive wie Silanverbindungen der allgemeinen Formel

$$SiR^1R^2R^3R^4$$

mit $R^1$ bis $R^4$

H
$C_yF_{2y+1-z}H_z$
$OC_yF_{2y+1-z}H_z$
$OC(O)C_yF_{2y+1-z}H_z$
$OSO_2C_yF_{2y+1-z}H_z$
und
$1 \leq x < 6$
$1 \leq y \leq 8$ und
$0 \leq z \leq 2y+1$

und
$R^1$-$R^4$ gleich oder verschieden
mit der Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, oder
mit der Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können (DE 100 276 26), können enthalten sein.

Die erfindungsgemäßen Verbindungen können auch in Elektrolyte eingesetzt werden, die Lithiumfluoralkylphosphate der folgenden Formel enthalten,

$$Li^+[PF_x(C_yF_{2y+1-z}H_z)_{6-x}]^-$$

worin

$1 \leq x \leq 5$

$3 \leq y \leq 8$

$0 \leq z \leq 2y + 1$
bedeuten und die Liganden $(C_yF_{2y+1-z}H_z)$ gleich oder verschieden sein können, wobei die Verbindungen der allgemeinen Formel,

$$Li^+[PF_a(CH_bF_c(CF_3)_d)_e]^-$$

in der a eine ganze Zahl von 2 bis 5, b = 0 oder 1, c = 0 oder 1, d = 2 und

e eine ganze Zahl von 1 bis 4 bedeuten, mit den Bedingungen, daß b und c nicht gleichzeitig jeweils = 0 bedeuten und die Summe aus a + e gleich 6 ist und die Liganden $(CH_bF_c(CF_3)_d)$ gleich oder verschieden sein können, ausgenommen sind (DE 100 089 55). Das Verfahren zur Herstellung von Lithiumfluoralkylphosphaten ist dadurch gekennzeichnet, daß wenigstens eine Verbindung der allgemeinen Formel

$$H_mP(C_nH_{2n+1})_{3-m} \quad (III),$$

$$OP(C_nH_{2n+1})_3 \quad (IV),$$

$$Cl_mP(C_nH_{2n+1})_{3-m} \quad (V),$$

$$F_mP(C_nH_{2n+1})_{3-m} \quad (VI),$$

$$Cl_oP(C_nH_{2n+1})_{5-o} \quad (VII),$$

$$F_oP(C_nH_{2n+1})_{5-o} \quad (VIII),$$

in denen jeweils

$0 < m < 2$, $3 < n < 8$ und $0 < o < 4$ bedeutet

durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Verbindungen können auch in Elektrolyten eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16801). Dargestellt werden die Verbindungen durch Umsetzung von Phosphor (V)-Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^+A^-$$

worin bedeuten:

$K^+$ ein Kation ausgewählt aus der Gruppe

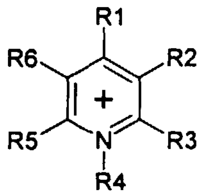
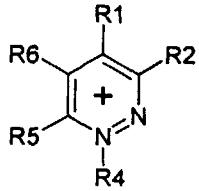
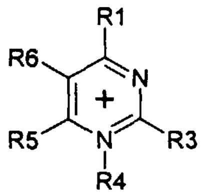
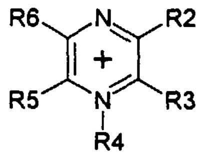
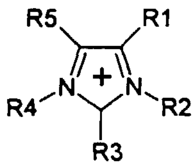
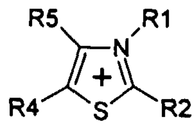
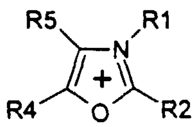
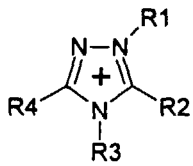

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1<n<6$ und $0<x\leq13$ substituiert sein kann

und

$A^-$ ein Anion ausgewählt aus der Gruppe

$[B(OR^1)_n(OR^2)_m(OR^3)_o(OR^4)_p]^-$

mit $0\leq n$, m, 0, $p\leq4$ und

$m+n+o+p=4$

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam

die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit $1<n<6$ und $0<x\leq13$ oder Halogen (F, Cl, Br) substituiert sein kann, besitzen,

die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder Halogen oder Halogen (F, Cl, Br) substituiert sein kann, besitzen,

die Bedeutung eines Alkylrests ($C_1$ bis $C_8$) der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen,

beziehungsweise $OR^1$ bis $OR^4$

einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$[PF_x(C_yF_{2y+1-z}H_z)_{6-x}]^-$ und

$1 \leq x < 6$

$1 \leq y \leq 8$ und

$0 \leq z \leq 2y+1$

können enthalten sein (DE 100 279 95).

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Die erfindungsgemäßen Verbindungen können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Verbindungen in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden. Ebenso können die erfindungsgemäßen Verbindungen in Systemen mit Kathoden eingesetzt werden, die Anodenmaterialien mit dotiertem Zinnoxid enthalten (DE 100 257 61). Dieses Anodenmaterial wird hergestellt indem

a) eine Zinnchlorid-Lösung mit Harnstoff versetzt wird,

b) die Lösung mit Urotropin und einer geeigneten Dotierverbindung versetzt wird,

c) das so erhaltene Sol in Petrolether emulgiert wird,

d) das erhaltene Gel gewaschen und das Lösungsmittel abgesaugt sowie

e) das Gel getrocknet und getempert wird.

Ebenso können die erfindungsgemäßen Verbindungen in Systemen mit Kathoden eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,

b) die Lösung mit Urotropin versetzt wird,

c) das so erhaltene Sol in Petrolether emulgiert wird,

d) das erhaltene Gel gewaschen und das Lösungsmittel abgesaugt wird,

e) das Gel getrocknet und getempert wird und

f) das erhaltene $SnO_2$ in einem begasbaren Ofen einem reduzierendem Gasstrom ausgesetzt wird.

Die erfindungsgemäßen Komplexsalze sind damit besonders als Leitsalze für Lithiumionen-Batterien und Superkondensatoren geeignet.
Nachfolgend wird ein allgemeines Beispiel der Erfindung näher erläutert.
Eingesetzt werden Lewis-Säure-Solvenz-Adukte, vorzugsweise aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$
worin

$R^1$ bis $R^5$ gleich oder verschieden sind, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch Halogen (F, Cl, Br) substituiert sein kann,

eines, gegebenenfalls über Sauerstoff gebundenen aromatischen Ring aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann.

Diese Adukte werden in geeigneten Batterie-Lösungsmitteln, vorzugsweise ausgewählt aus der Gruppe Dimethylcarbonat, Diethylcarbonat, Propylencarbonat, Ethylencarbonat, Ethylmethylcarbonat, Methylpropylcarbonat, γ-Butyrolacton, Methylacetat, Ethylacetat, Methylpropionat, Ethylpropionat, Methylbutyrat, Ethylbutyrat, Dimethylsulfoxid, Dioxolan, Sulfolan, Acetonitril, Acrylnitril, Tetrahydrofuran, 2-Methyl-Tetrahydrofuran und deren Mischungen, gelöst.
Durch Zugabe der Metallsalze, wobei das Anion ausgewählt ist aus der Gruppe

$OR^6$, $NR^6R^7$ oder $CR^6R^7R^8$,

$OSO_2R^6$, $N(SO_2R^6)(SO_2R^7)$, $C(SO_2R^6)(SO_2R^7)(SO_2R^8)$ oder $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, werden Verbindungen entsprechend der allgemeinen Formel (I) dargestellt.

Besonders bevorzugt werden Verbindungen der allgemeinen Formel (I) mit $M^{x+} = Li^+$ oder Tetraalkylammoniumion und $E=BR^1{}_aR^2{}_bF_c$ und $PR^1{}_dR^2{}_eR^3{}_fR^4{}_gF_h$, mit a bis h= 0, 1, 2, 3, 4 oder 5, mit a+b+c=3 und d+e+f+g+h=5 durch Umsetzung von einem entsprechenden Bor- oder Phosphor-Lewis-Säure-Solvenz-Adukt mit einem Lithium- oder Tetraalkylammonium-Imid, -Methanid oder -Triflat hergestellt.

Die nachfolgenden Beispiele sollen die Erfindung näher erläutern, ohne sie jedoch zu beschränken.

Beispiele

Beispiel 1

Darstellung des Komplexsalzes $Li[BF_3 \cdot N(SO_2CF_3)_2]$

Diethylcarbonat wird bei Raumtemperatur 20 min mit Bortrifluorid begast. Hierbei wird die Reaktionstemperatur durch äußere Kühlung bei 40°C gehalten. Beim Abkühlen fällt ein farbloses, kristallines $BF_3 \cdot$ Diethylcarbonat aus. Der Feststoff wird unter Schutzgas abfiltriert und im Vakuum bei Raumtemperatur getrocknet.

In einem Reaktionsgefäß aus PTFE wird eine Mischung aus 29,7 g Ethylencarbonat und 26,22 g Diethylcarbonat vorgelegt. Unter Kühlung werden 5,5 g (0,03 mol) $BF_3 \cdot$ Diethylcarbonat und 8,5 g (0,03 mol) Lithiumimid $Li[N(SO_2CF_3)_2]$ zugegeben. Die erhaltene Lösung wird direkt als Batterieelektrolyt mit $Li[BF_3 \cdot N(SO_2CF_3)_2]$ als Leitsalz verwendet.

Konzentration des Leitsalzes: 0,5 $mol/kg_{LM}$
$^{19}F$-NMR (282 MHz, $CD_3CN$)
ppm:

-151 s (3 F), 3 B-F

-80 s (6 F), 2 $SO_2C-F_3$

Beispiel 2

Darstellung des Komplexsalzes $Li[BF_3 \cdot SO_3CF_3]$

Diethylcarbonat wird bei Raumtemperatur 20 min mit Bortrifluorid begast. Hierbei wird die Reaktionstemperatur durch äußere Kühlung bei 40°C gehalten. Beim Abkühlen fällt ein farbloses, kristallines $BF_3 \cdot$ Diethylcarbonat aus. Der Feststoff wird unter Schutzgas abfiltriert und im Vakuum bei Raumtemperatur getrocknet.

In einem Reaktionsgefäß aus PTFE wird eine Mischung aus 31,50 g Ethylencarbonat und 27,82 g Diethylcarbonat vorgelegt. Unter Kühlung werden 8,80 g (0,03 mol) $BF_3 \cdot$ Diethylcarbonat und 4,80 g (0,03 mol) Lithiumtriflat $Li[SO_3CF_3]$ zugegeben. Die erhaltene Lösung wird direkt als Batterieelektrolyt mit $Li[BF_3 \cdot SO_3CF_3]$ als Leitsalz verwendet.

Konzentration des Leitsalzes: 0,5 $mol/kg_{LM}$
$^{19}F$-NMR (282 MHz, $CD_3CN$)
ppm:

-149 s (3 F), 3 B-F
-79 s (3 F), 1 $SO_3C-F_3$

Beispiel 3

Elektrochemische Stabilität der Elektrolyten

In einer Meßzelle mit Platinelektrode, Lithiumgegenelektrode und Lithiumreferenzelektrode wurden jeweils

mehrere Zyklovoltammogramme hintereinander aufgenommen. Hierzu wurde ausgehend vom Ruhepotential das Potential zuerst mit einer Vorschubgeschwindigkeit von 20 mV/s auf 6 V gegen $Li/Li^+$ erhöht und im weiteren Verlauf zurück auf das Ruhepotential gefahren. Als Elektrolyte werden die in den Beispielen 1 und 2 angegebenen Lösungen verwendet.

Es zeigt sich der in Abbildung 1 und 2 angegebene charakteristische Verlauf. Die Elektrolyte sind somit für einen Einsatz in Lithiumionen-Batterien mit Übergangsmetallkathode geeignet.

Beispiel 4

Ionenleitfähigkeit der Elektrolyten

Die Ionenleitfähigkeit der Leitsalze wurden in einem Lösungsmittelgemisch aus EC/DEC (1:1) mit einer Konzentration von 0,5 mol/kg bei einer Temperatur von 25°C gemessen.

| Leitsalz | Leitfähigkeit [mS/cm] |
|---|---|
| $Li[BF_3 \cdot N(SO_2CF_3)_2]$ | 4,8 |
| $Li[N(SO_2CF_3)_2]$ | 4,5 |
| $Li[BF_3 \cdot SO_3CF_3]$ | 3,7 |
| $Li[SO_3CF_3]$ | 1,9 |

Die teilweise deutlich verbesserten Leitfähigkeiten der Komplexsalze gegenüber den Vergleichsverbindungen zeichnen sie als gute Leitsalze für elektrochemische Zellen aus.

Beispiel 5

Passivierung von Aluminium

In einer Meßzelle mit Aluminiumelektrode, Lithiumgegenelektrode und Lithiumreferenzelektrode wurden jeweils mehrere Zyklovoltammogramme hintereinander aufgenommen. Hierzu wurde ausgehend vom Ruhepotential das Potential zuerst mit einer Vorschubgeschwindigkeit von 20 mV/s auf 5 V gegen $Li/Li^+$ erhöht und im weiteren Verlauf zurück auf das Ruhepotential gefahren. Als Elektrolyte wurden die in den Beispielen 1 und 2 angegebenen Lösungen verwendet.

Es zeigt sich der in Abbildung 4 ($Li[BF_3\ N(SO_2CF_3)_2]$) und Abbildung 5 ($Li[BF_3\ SO_3CF_3]$) angegebene charakteristische Verlauf. Der mit zunehmender Zyklenzahl fallende Strom deutet auf eine Passivierung des Aluminiums hin. Nach dem Experiment ist keine Korrosion des Aluminiums erkennbar. Die Elektrolyte sind somit für einen Einsatz in Lithiumionen-Batterien mit Übergangsmetallkathode geeignet.

Vergleichsbeispiel 1

Korrosion von Aluminium

In einer Meßzelle mit Aluminiumelektrode, Lithiumgegenelektrode und Lithiumreferenzelektrode wurden jeweils mehrere Zyklovoltammogramme hintereinander aufgenommen. Hierzu wurde ausgehend vom Ruhepotential das Potential zuerst mit einer Vorschubgeschwindigkeit von 20 mV/s auf 5 V gegen $Li/Li^+$ erhöht und im weiteren Verlauf zurück auf das Ruhepotential gefahren. Als Elektrolyt wurden Lösungen aus Lithiumimid $Li[N(SO_2CF_3)_2]$ bzw. Lithiumtriflat $Li[SO_3CF_3]$ in EC/DEC 1:1 verwendet.

Beide Elektroden zeigen den gleichen, charakteristischen Strom-Spannungs-Verlauf. Der mit zunehmender Zyklenzahl ansteigende Strom deutet auf eine Korrosion des Aluminiums hin. Nach den Experimenten sind klare Korrosionsspuren (Lochfraß) erkennbar. Abbildung 3 gibt exemplarisch den Verlauf im Lithiumimid Elektrolyten wieder. Die Elektrolyte sind somit für einen Einsatz in Lithiumionen-Batterien mit Übergangsmetallkathode und Aluminiumstromableiter nicht geeignet.

**Patentansprüche**

1. Komplexsalze der allgemeinen Formel

$$M^{x+}[EZ]^{y-}_{x/y} \quad (I)$$

worin bedeuten:

x, y 1, 2, 3, 4, 5, 6

$M^{x+}$ ein Metallion

E einer Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben.

2. Komplexsalze gemäß Anspruch 1, dadurch gekennzeichnet, daß $M^{x+}$ die Bedeutung $Li^+$ oder Tetraalkylammonium und E die Bedeutung $BR^1{}_aR^2{}_bF_c$ und $PR^1{}_dR^2{}_eR^3{}_fR^4{}_gF_h$ mit a bis h= 0, 1, 2, 3, 4 oder 5, mit a+b+c=3 und d+e+f+g+h=5 hat.

3. Verfahren zur Herstellung von Verbindungen der allgemeinen Formel (I) mit $M^{x+} = Li^+$ oder Tetraalkylammoniumion und $E = BR^1{}_aR^2{}_bF_c$ und $PR^1{}_dR^2{}_eR^3{}_fR^4{}_gF_h$ mit a bis h= 0, 1, 2, 3, 4 oder 5, mit a+b+c=3 und d+e+f+g+h=5 durch Umsetzung von einem entsprechenden Bor- oder Phosphor-Lewis-Säure-Solvenz-Adukt mit einem Lithium- oder Tetraalkylammonium-Imid, -Methanid oder - Triflat.

4. Verwendungen der Verbindungen gemäß Anspruch 1 und deren Mischungen als Leitsalz in Elektrolyten für elektrochemische Zellen.

5. Verwendung der Verbindungen gemäß Anspruch 1 in Mischungen mit anderen Leitsalzen in Elektrolyten für elektrochemische Zellen.

6. Verwendung der Verbindungen gemäß Anspruch 1 und deren Mischungen oder in Mischungen mit anderen Leitsalzen in Elektrolyten für Batterien und Superkondensatoren.

Abb. 1

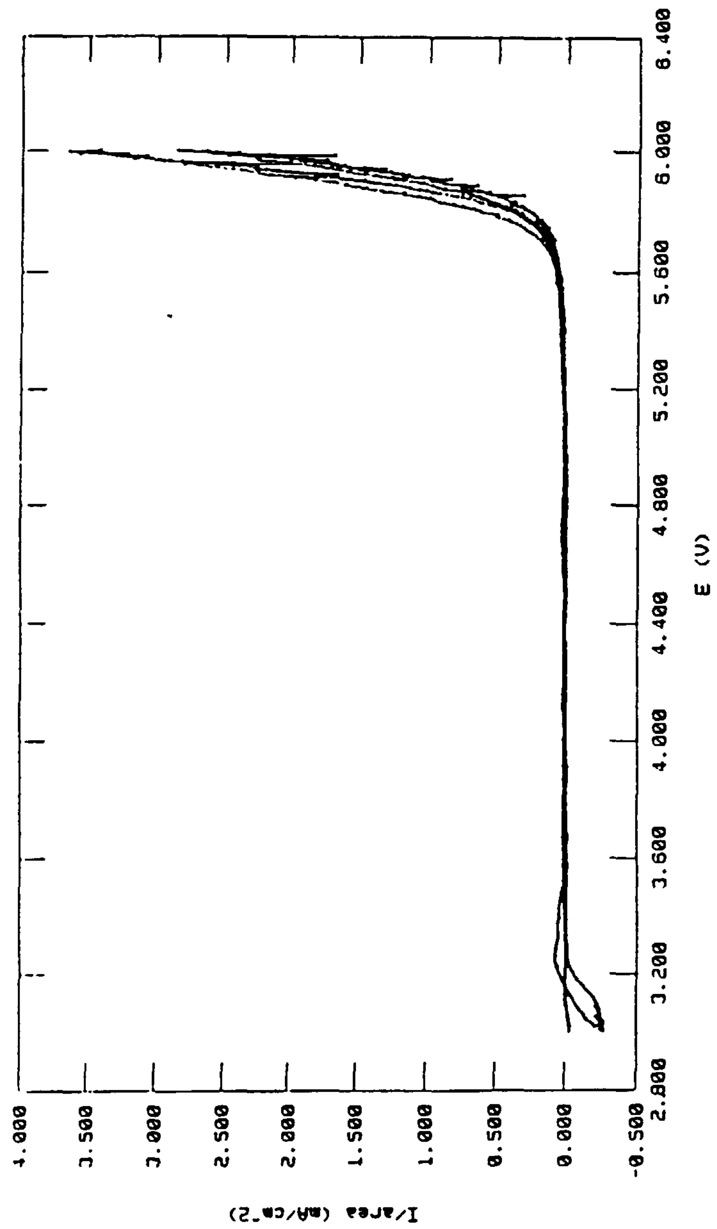

4.000
3.500
3.000
2.500
2.000
1.500
1.000
0.500
0.000
-0.500
I/area (mA/cm^2)
2.800
3.200
3.600
4.000
4.400
4.800
5.200
5.600
6.000
6.400
E (V)

Abb. 2

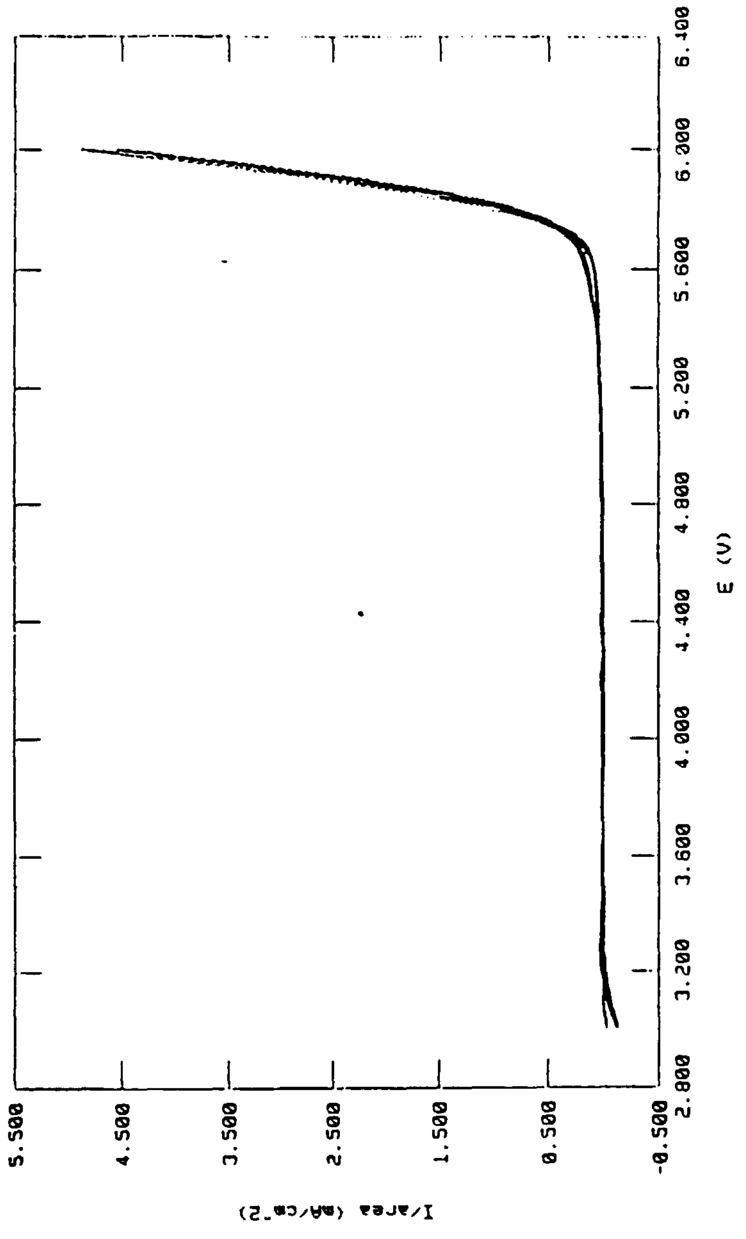
I/area (mA/cm^2)
5.500
4.500
3.500
2.500
1.500
0.500
-0.500
E (V)
2.800
3.200
3.600
4.000
4.400
4.800
5.200
5.600
6.000
6.400

Abb. 3

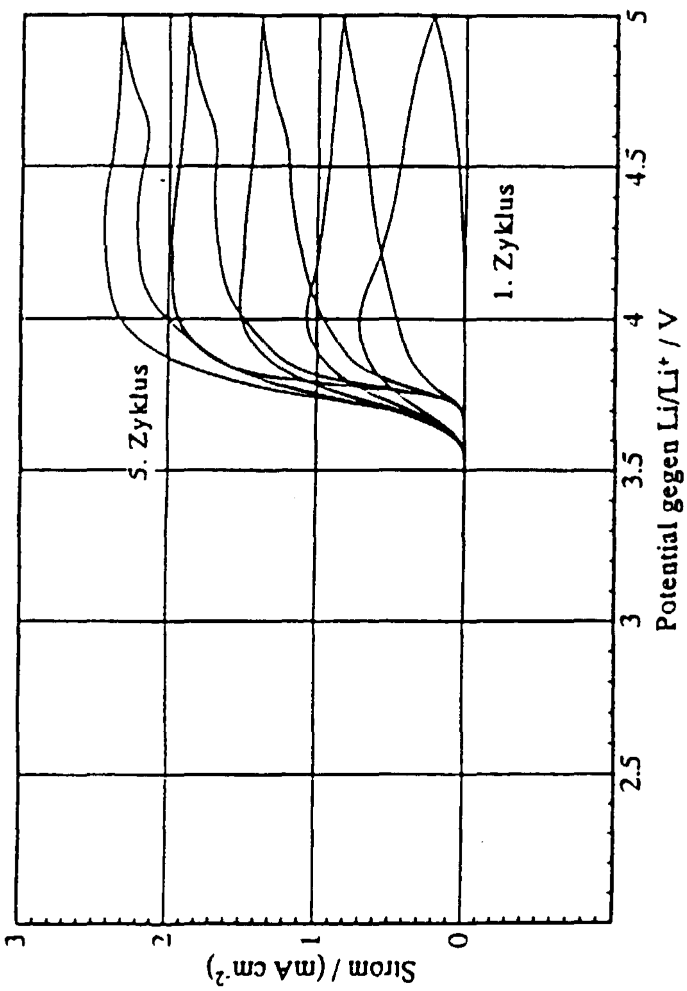
5. Zyklus
1. Zyklus
Potential gegen Li/Li+ / V
Strom / (mA cm-2)
2.5
3
3.5
4
4.5
5
0
1
2
3

Abb. 4

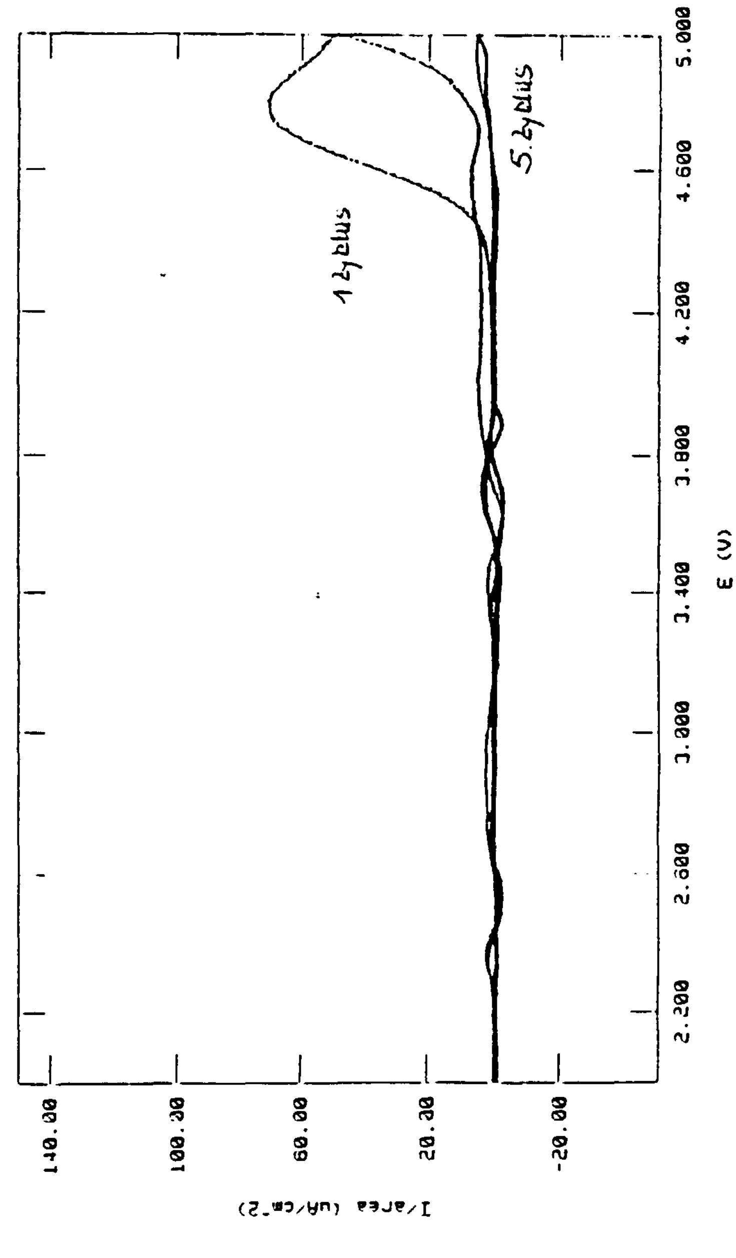

1.Zyklus
5.Zyklus
140.00
100.00
60.00
20.00
-20.00
I/area (uA/cm^2)
2.200
2.600
3.000
3.400
3.800
4.200
4.600
5.000
E (V)

Abb. 5

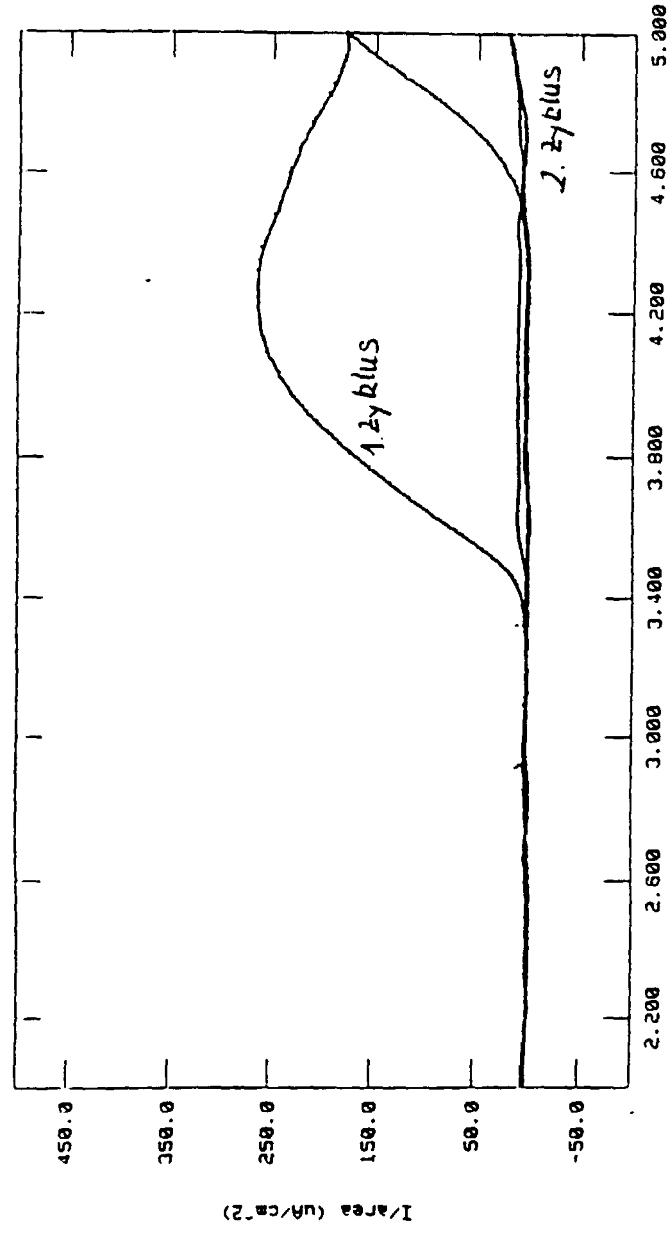

I/area (uA/cm^2)
450.0
350.0
250.0
150.0
50.0
-50.0
2.200
2.600
3.000
3.400
3.800
4.200
4.600
5.000
1. Zyklus
2. Zyklus